# EUROPEAN PATENT APPLICATION

(11) **EP 3 427 625 A1**
(43) Date of publication of application: **16.01.2019**
(21) Application number: 17762765.0
(22) Date of filing: 01.02.2017
(51) Int. Cl.: A47L 9/28

(54) **CONTROL DEVICE FOR AUTONOMOUS VACUUM CLEANER, AUTONOMOUS VACUUM CLEANER PROVIDED WITH CONTROL DEVICE, AND CLEANING SYSTEM PROVIDED WITH CONTROL DEVICE FOR AUTONOMOUS VACUUM CLEANER**

(30) Priority: 11.03.2016 JP 2016048098
(71) Applicant: Panasonic Intellectual Property Management Co., Ltd., Osaka-shi, Osaka 540-6207 (JP)
(72) Inventor: OKAYAMA, Masato, Osaka 540-6207 (JP); NAKANISHI, Kuniyuki, Osaka 540-6207 (JP); MIURA, Yuta, Osaka 540-6207 (JP); UCHIYAMA, Wataru, Osaka 540-6207 (JP); OZEKI, Yuji, Osaka 540-6207 (JP)
(74) Representative: SSM Sandmair
(86) International application number: PCT/JP2017/003524
(87) International publication number: WO 2017/154420

(57) **Abstract**

Control unit (70) for autonomous vacuum cleaner (10) includes controller (71) that controls autonomous vacuum cleaner (10) including cleaning unit (40) and suction unit (60) collecting dust on a floor surface. Controller (71) controls autonomous vacuum cleaner (10) based on information about a behavior of a human in a cleaning target area that can be cleaned by autonomous vacuum cleaner (10). This makes it possible to provide control device (70) for autonomous vacuum cleaner (10) that can efficiently collect dust.

## Description

### TECHNICAL FIELD

The present invention relates to a control device for an autonomous vacuum cleaner that moves autonomously to clean a floor surface in a cleaning target area, an autonomous vacuum cleaner provided with the control device, and a cleaning system provided with the control device for an autonomous vacuum cleaner.

### BACKGROUND ART

There has been conventionally disclosed an autonomous vacuum cleaner that moves autonomously to clean a floor surface in a cleaning target area (for example, see PTL 1).

The cleaning target area includes a human behavior space. Dust on the floor surface in the cleaning target area is generated by behaviors of humans in the cleaning target area. For this reason, an amount of dust in the cleaning target area and a time when dust is generated in the cleaning target area vary.

However, a conventional autonomous vacuum cleaner performs cleaning, for example, along a route determined in advance by an operation of a user. Consequently, the conventional autonomous vacuum cleaner might not clean the cleaning target area appropriately.

### Citation List

### Patent Literature

PTL 1: Unexamined Japanese Patent Publication No. 2005-211364

### SUMMARY OF THE INVENTION

A control device for an autonomous vacuum cleaner according to the present invention includes a controller that controls an autonomous vacuum cleaner including a cleaning part collecting dust on a floor surface. The controller controls the autonomous vacuum cleaner based on information about a behavior of a human in a cleaning target area to be cleaned by the autonomous vacuum cleaner.

This configuration enables the autonomous vacuum cleaner to be controlled based on the information about the behavior of the human in the cleaning target area. It is thus possible to achieve the autonomous vacuum cleaner that appropriately cleans the cleaning target area based on the behavior of the human.

An autonomous vacuum cleaner according to the present invention includes the control device for an autonomous vacuum cleaner and a detector that detects information about the behavior of the human. The detector includes at least one of a camera that captures an image of the cleaning target area, an infrared sensor that detects infrared light in the cleaning target area, an illuminance sensor that detects illuminance in the cleaning target area, and a vibration sensor that detects a vibration in the cleaning target area.

A cleaning system according to the present invention includes the autonomous vacuum cleaner, the control device for an autonomous vacuum cleaner, and a detector that detects information about the behavior of the human. The detector includes at least one of a camera that captures an image of a cleaning target area, an infrared sensor that detects infrared light in the cleaning target area, an illuminance sensor that detects illuminance in the cleaning target area, and a vibration sensor that detects a vibration in the cleaning target area.

According to the control device for an autonomous vacuum cleaner, the autonomous vacuum cleaner provided with the control device, and the cleaning system provided with the control device for an autonomous vacuum cleaner, it is possible to appropriately clean the cleaning target area.

### BRIEF DESCRIPTION OF DRAWINGS

FIG. 1 is a perspective view of a cleaning system according to a first exemplary embodiment.
FIG. 2 is a plan view of an autonomous vacuum cleaner of FIG. 1.
FIG. 3 is a bottom view of the autonomous vacuum cleaner of FIG. 1.
FIG. 4 is a block diagram of the cleaning system of FIG. 1.
FIG. 5 is a flowchart of standby control.
FIG. 6 is a flowchart of cleaning control.
FIG. 7 is a schematic diagram of a first example of a movement route of the autonomous vacuum cleaner during the cleaning control.
FIG. 8 is a graph of an amount of dust in each section collected during the cleaning control.
FIG. 9 is a schematic diagram of a second example of the movement route of the autonomous vacuum cleaner during the cleaning control.
FIG. 10 is a timing chart of a relationship between a human behavior in a cleaning target area and a detection value detected by a detector.
FIG. 11 is a map of the amount of dust in each section of the cleaning target area, the map being created by a controller according to a second exemplary embodiment.
FIG. 12 is a flowchart of cleaning control according to the second exemplary embodiment.
FIG. 13 is a flowchart of brush control according to a third exemplary embodiment.
FIG. 14 is a flowchart of cleaning control according to a fourth exemplary embodiment.
FIG. 15 is a schematic diagram of an example of a movement route of an autonomous vacuum cleaner according to a fifth exemplary embodiment when the autonomous vacuum cleaner cleans flooring.
FIG. 16 is a schematic diagram of an example of a movement route of the autonomous vacuum cleaner according to the fifth exemplary embodiment when the autonomous vacuum cleaner cleans tatami mats.
FIG. 17 is a block diagram of a cleaning system according to a modification.

### DESCRIPTION OF EMBODIMENTS

Exemplary embodiments of the present invention are hereinafter described with reference to the drawings. Note that, the present invention is not limited by the exemplary embodiments.

### (First Exemplary Embodiment)

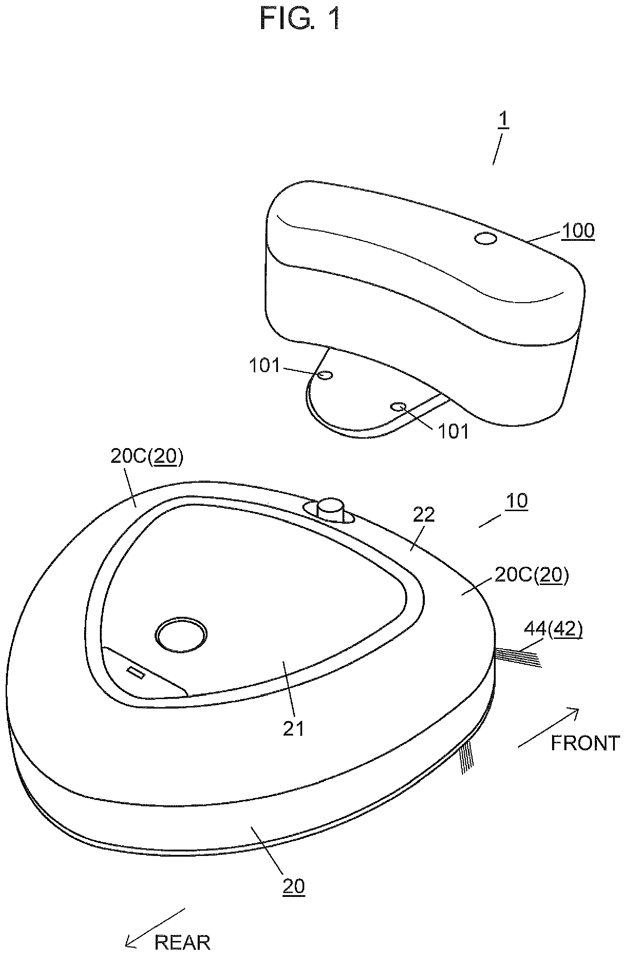

Configurations of a control device for autonomous vacuum cleaner 10, autonomous vacuum cleaner 10 provided with the control device, and cleaning system 1 provided with the control device and autonomous vacuum cleaner 10 according to a first exemplary embodiment are described below with reference to FIGS. 1 to 4.

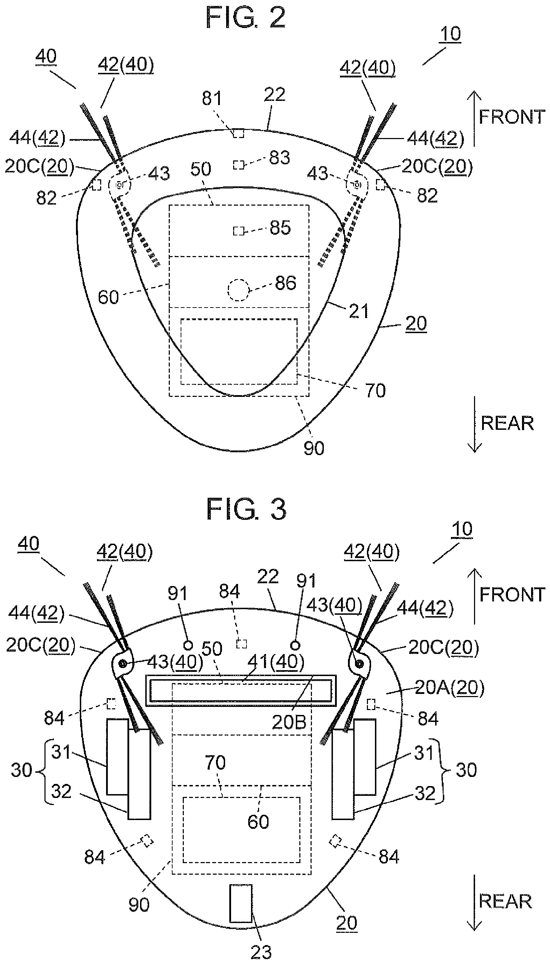

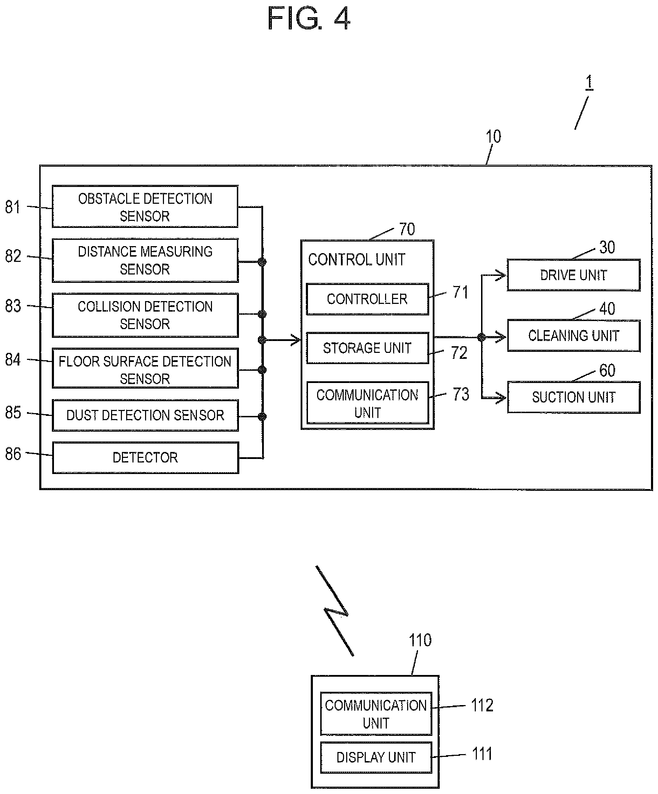

FIG. 1 is a perspective view of cleaning system 1 according to the first exemplary embodiment. FIG. 2 is a plan view of autonomous vacuum cleaner 10 of FIG. 1. FIG. 3 is a bottom view of autonomous vacuum cleaner 10 of FIG. 1. FIG. 4 is a block diagram of cleaning system 1 of FIG. 1.

Cleaning system 1 according to the present exemplary embodiment includes, as shown in FIGS. 1 to 4, autonomous vacuum cleaner 10 (hereinafter, simply referred to as "cleaner 10"), charger 100, display device 110, and the like. Charger 100 charges power unit 90 of cleaner 10. Display device 110 is configured to be communicable with cleaner 10.

Charger 100 is disposed on a floor surface and connected through a power cord (not shown) to a household power supply. Charger 100 includes terminals 101 electrically connected to terminals 91 of power unit 90 in cleaner 10 (see FIG. 3).

Cleaner 10 according to the present exemplary embodiment is exemplified by a robot vacuum cleaner that autonomously moves on a floor surface in a cleaning target area to suck dust on the floor surface. The cleaning target area is, for example, a floor surface of a room.

As shown in FIGS. 2 and 3, cleaner 10 includes body 20, drive unit 30, cleaning unit 40, wastebasket 50, suction unit 60, control unit 70, power unit 90, and the like. A part of drive unit 30, a part of cleaning unit 40, wastebasket 50, suction unit 60, control unit 70, and power unit 90 are disposed in body 20. Control unit 70 corresponds to a control device for autonomous vacuum cleaner 10. Cleaning unit 40 and suction unit 60 correspond to a cleaning part that collects dust on a floor surface.

The units described above have the following functions.

That is, various components constituting cleaner 10 are incorporated in body 20. Drive unit 30 moves body 20 to clean a floor surface. Cleaning unit 40 collects dust around body 20 to an underside of body 20 and then brushes off the dust. Wastebasket 50 accommodates dust collected by suction unit 60. Suction unit 60 sucks dust brushed off by cleaning unit 40 into body 20. Control unit 70 controls operations of drive unit 30, cleaning unit 40, suction unit 60, and the like. Power unit 90 supplies power to drive unit 30, cleaning unit 40, suction unit 60, and the like.

For example, body 20 has a planar shape of a Reuleaux triangle, a polygon substantially similar to the Reuleaux triangle, or a Reuleaux triangle or a polygon with rounded corners. As body 20 is shaped as described above, body 20 has geometric characteristics that are the same as or similar to those of the Reuleaux triangle.

As shown in FIG. 2, cleaner 10 further includes panel cover 21, bumper 22, and the like. Panel cover 21 covers an operation panel (not shown) on an upper part of body 20. Panel cover 21 is attached on the upper part of body 20 to be openable and closeable relative to body 20. Bumper 22 absorbs impact applied to body 20. Bumper 22 is provided in a front part of body 20 to be capable of being displaced relative to body 20.

As shown in FIG. 3, cleaner 10 further includes caster 23. Caster 23 supports a rear part of body 20. Caster 23 is rotated according to an operation of drive unit 30.

Body 20 includes suction port 20B that is open to bottom surface 20A. Suction port 20B sucks dust on the underside of body 20 into body 20.

Cleaning unit 40 includes a first brush drive motor, a second brush drive motor, a first power transmission part, a second power transmission part (these are not shown), main brush 41, side brush 42, and the like. The first and second brush drive motors and the first and second power transmission parts are disposed in body 20. The first power transmission part is coupled to main brush 41 and transmits a torque of the first brush drive motor to main brush 41. The second power transmission part is coupled to side brush 42 and transmits a torque of the second brush drive motor to side brush 42. The first and second power transmission parts are constituted by, for example, gears and the like.

Main brush 41 brushes off dust on the underside of body 20, for example, dust on a floor surface. For example, main brush 41 includes a core having a rotational axis and brush bristles around an outer periphery of the core, and is disposed at suction port 20B. Main brush 41 is driven by the first power transmission part to rotate in a direction of brushing off dust from downward to upward on a rear side relative to the rotational axis.

Side brush 42 guides dust on a floor surface around body 20 to suction port 20B and main brush 41. Cleaner 10 includes, for example, paired side brushes 42. Paired side brushes 42 are provided on left and right front side parts of bottom surface 20A of body 20, respectively. Side brushes 42 are driven by the second power transmission part to rotate in a direction of collecting dust from front of body 20 toward suction port 20B.

Each of side brushes 42 includes brush shaft 43 and a plurality of bristle bundles 44 around an outer periphery of brush shaft 43. Body 20 and side brushes 42 are configured in a manner that a user can freely select a state where side brushes 42 are attached to body 20 and a state where side brushes 42 are removed from body 20.

Brush shaft 43 is made of metal such as stainless. For example, brush shaft 43 is formed in a cylindrical shape. Side brush 42 is attached on a side of bottom surface 20A of body 20, and is coupled via brush shaft 43 to the second power transmission part. In a state where side brush 42 is coupled to the second power transmission part, brush shaft 43 is disposed to project downward from bottom surface 20A of body 20. A central axis of brush shaft 43 is disposed along a height direction of body 20.

Each of bristle bundles 44 is configured by bundling bristles, and collects dust on a floor surface. For example, 50 bristles constitute bristle bundle 44. Bristles are formed of, for example, nylon. Bristle bundles 44 rotate about brush shaft 43 to collect dust on a floor surface to suction port 20B.

A drive system for moving cleaner 10 is constituted by an opposed two-wheel system. Cleaner 10 thus includes paired drive units 30. Each drive unit 30 includes a wheel drive motor (not shown), drive wheel 31, housing 32, and the like. The wheel drive motor, which is coupled to a shaft of drive wheel 31, is disposed in housing 32, and transmits a torque to drive wheel 31. Drive wheel 31 includes a wheel coupled to the shaft and a tire attached to an outer periphery of the wheel. The tire has a tread pattern for enabling the tire to stably run on a varying surface such as a carpet.

Wastebasket 50 is disposed on a front side of suction unit 60 in a front-rear direction of body 20. When body 20 is planarly viewed, paired drive units 30 are disposed to sandwich wastebasket 50 in a width direction perpendicular to the front-rear direction of body 20. Body 20 and wastebasket 50 are configured in a manner that a user can freely select a state where wastebasket 50 is attached to body 20 and a state where wastebasket 50 is removed from body 20.

Suction unit 60 includes an electric fan (not shown) and is disposed between wastebasket 50 and power unit 90 in the front-rear direction of body 20. The electric fan generates suction force for sucking air within wastebasket 50. When the electric fan is driven, dust brushed off by main brush 41 is moved in wastebasket 50.

Control unit 70 is disposed on power unit 90 (on a side of panel cover 21) in body 20, and is electrically connected to power unit 90. As shown in FIG. 4, control unit 70 includes controller 71 that executes various control and performs various calculations, storage unit 72, and communication unit 73 communicable with external devices. For example, controller 71 includes a semiconductor integrated circuit such as a CPU (Central Processing Unit). For example, storage unit 72 is constituted by a non-volatile semiconductor memory such as a flash memory. Storage unit 72 stores various programs performed by controller 71 and parameters. For example, communication unit 73 is configured to be capable of wirelessly communicating with communication unit 112 of display device 110.

For example, display device 110 is exemplified by a smartphone or a personal computer. Display device 110 includes display unit 111 that displays information received by communication unit 112.

For example, various control may be set in controller 71 based on conditions input by a user through an operation panel or a remote controller.

Cleaner 10 according to the present exemplary embodiment further includes a plurality of sensors to be described below, as shown in FIGS. 2 to 4.

The sensors include, for example, obstacle detection sensor 81, a plurality of distance measuring sensors 82, collision detection sensor 83, a plurality of floor surface detection sensors 84, dust detection sensor 85, and detector 86. These sensors are electrically connected to controller 71 of control unit 70 and power unit 90 (see FIG. 2) to output detection signals to controller 71.

Obstacle detection sensor 81 detects a distance to an obstacle present on the front side of body 20. Obstacle detection sensor 81 is constituted by, for example, an ultrasonic sensor including a transmitter and a receiver. Obstacle detection sensor 81 outputs, to controller 71, signals based on whether an obstacle is present (see FIG. 4).

Each distance measuring sensor 82 detects a distance between an object present around body 20 and body 20. Distance measuring sensor 82 is constituted by, for example, an infrared sensor including a light emitting part and a light receiving part. Distance measuring sensor 82 outputs, to controller 71, signals based on the distance between an object present around body 20 and body 20 (see FIG. 4).

Collision detection sensor 83 detects that body 20 has collided with an object present around body 20. Collision detection sensor 83 is constituted by, for example, a contact displacement sensor including a switch that is switched on when bumper 22 is pressed into body 20. Collision detection sensor 83 outputs, to controller 71, signals indicating a collision between an object present around body 20 and body 20 (see FIG. 4).

Each floor surface detection sensor 84 detects a distance to a floor surface. Floor surface detection sensor 84 is constituted by, for example, an infrared sensor including a light emitting part and a light receiving part.

Dust detection sensor 85 detects an amount of dust flowing in a path within wastebasket 50. Dust detection sensor 85 is constituted by, for example, an infrared sensor including a light emitting part and a light receiving part. Dust detection sensor 85 outputs signals based on the amount of dust collected in wastebasket 50 to controller 71 (see FIG. 4).

Floor surface detection sensors 84 according to the present exemplary embodiment are, for example, first to fifth floor surface detection sensors 84. First floor surface detection sensor 84 is provided to be further forward than main brush 41 in the front-rear direction of body 20. Second floor surface detection sensor 84 is provided between right side brush 42 and right drive unit 30 in the front-rear direction of body 20. Third floor surface detection sensor 84 is provided between left side brush 42 and left drive unit 30 in the front-rear direction of body 20. Fourth floor surface detection sensor 84 is provided to be further rearward than right drive unit 30, right side brush 42, and main brush 41 in the front-rear direction of body 20. Fifth floor surface detection sensor 84 is provided to be further rearward than left drive unit 30, left side brush 42, and main brush 41 in the front-rear direction of body 20.

Detector 86 is provided within panel cover 21. Detector 86 is constituted by, for example, an infrared sensor capable of monitoring ambient temperature distributions. Specifically, detector 86 uses a multiple infrared sensor in which a plurality of pyroelectric sensors such as PZT (Lead Zirconate Titanates) are arranged. The infrared sensor is constituted by, for example, 16 × 16 = 256 pyroelectric sensors. For example, detector 86 includes, in addition to the infrared sensor, an illuminance sensor, a camera, and a vibration sensor, if necessary.

Detector 86 determines a position of a measurement target based on a distance and a direction. Humans normally have a temperature higher than a room temperature and higher than a temperature of furniture in a room, and move in a cleaning target area. Information about a human behavior is thus included in a temperature distribution detected by detector 86 and a change in the temperature distribution. Detector 86 outputs a detected temperature distribution to controller 71 as information about a human behavior. Detector 86 is preferably capable of monitoring an overall cleaning target area cleaned by cleaner 10.

The sensors according to the present exemplary embodiment are configured as described above.

A function of controller 71 in control unit 70 is described below with reference to FIGS. 1 to 4.

Specifically, controller 71 first determines whether an object that hinders a movement of cleaner 10 is present in a predetermined range on the front side of body 20, based on a detection signal input from obstacle detection sensor 81. Controller 71 calculates a distance between an object present around a side part of body 20 and an outline of body 20 based on a detection signal input from distance measuring sensor 82. Controller 71 determines whether body 20 has collided with an object present around body 20 based on a detection signal input from collision detection sensor 83. Controller 71 calculates a distance between bottom surface 20A of body 20 and a floor surface based on a detection signal input from floor surface detection sensor 84.

Next, controller 71 creates a map of a cleaning target area based on information output from the various sensors and movement data of cleaner 10 during cleaning, and stores the map in storage unit 72. The map is created by a mapping technique such as SLAM (Simultaneous Localization and Mapping).

Next, controller 71 divides the created map of the cleaning target area into a plurality of sections. The map of the cleaning target area may be input from external devices via communication unit 73. When the map of the cleaning target area is created based on the movement data of cleaner 10, the cleaning target area matches a movable range of cleaner 10.

Next, controller 71 determines the amount of dust collected in wastebasket 50 based on a detection signal input from dust detection sensor 85. Controller 71 then displays the amount of dust collected in wastebasket 50 on an operation panel or the like.

Next, controller 71 determines a human behavior in the cleaning target area based on a detection signal input from detector 86. Specifically, controller 71 determines whether a result of recognizing a human is included in an infrared distribution in the cleaning target area, which is detected by detector 86. Recognition of a human is made by determining whether a thermal distribution is present, the thermal distribution satisfying a ratio of a size and a shape of parts of a human such as a head, an arm, and a foot, which are stored in advance in storage unit 72.

That is, if the infrared distribution detected by detector 86 satisfies the ratio of the size and the shape of parts of a human such as a head, an arm, and a foot, which are stored in storage unit 72, controller 71 determines that a human is present in the cleaning target area. In this case, similarly to a human present, if the infrared distribution detected by detector 86 satisfies a ratio of a size and a shape of parts of a pet such as a head, an arm, and a foot, which are stored in storage unit 72, controller 71 determines that a pet is present in the cleaning target area.

At the same time, controller 71 determines an activity level of a human present in the cleaning target area based on the infrared distribution detected by detector 86 and a change over time in the infrared distribution or an amount of heat.

In addition, controller 71 determines which section in the cleaning target area a human stays, based on the infrared distribution detected by detector 86.

When the various determinations about a human, which have been described above, are made by the infrared distribution detected by detector 86, controller 71 preferably obtains in advance data of a heat generator other than a human and uses the data for determining whether a human is present. Examples of the heat generator other than a human include light emission by lighting equipment, hot air by an air conditioner, and heat generation by a household electric appliance.

Next, controller 71 determines whether the detected infrared distribution is a distribution for a human based on a position, a shape, and a displacement of a thermal distribution of a heat generator other than a human. In this case, if controller 71 determines that the heat generator included in the thermal distribution is not a human, controller 71 cancels the determination that a human is present.

Controller 71 accumulates, based on the information from detector 86, a time during which a human stays in the cleaning target area, using a program for measuring human stay time T, and stores the time in storage unit 72.

Controller 71 functions as described above.

An example of control executed by control unit 70 is specifically described below.

Control unit 70 executes a plurality of types of control for the purpose of cleaning a cleaning target area. The plurality of types of control include at least start-up control, standby control, cleaning control, and the like.

The standby control is executed when terminal 91 of power unit 90 in cleaner 10 is at an initial position of being electrically connected to terminal 101 of charger 100. The cleaning control is executed when parameters about human behaviors satisfy predetermined conditions during the standby control. The start-up control is executed when a power switch (not shown) of an operation panel is switched on (ON) and power is supplied from power unit 90 to controller 71.

The start-up control is described first.

In the start-up control, controller 71 checks residual battery power of a storage battery in power unit 90, a state of wastebasket 50 being attached to cleaner 10, loads on various drive motors (not shown), and energized states of various sensors. If an abnormality is detected, controller 71 informs a user of the detected abnormality through an operation panel or the like, and at the same time, prohibits operations of the various drive motors. On the other hand, if an abnormality is not detected, controller 71 proceeds to the standby control.

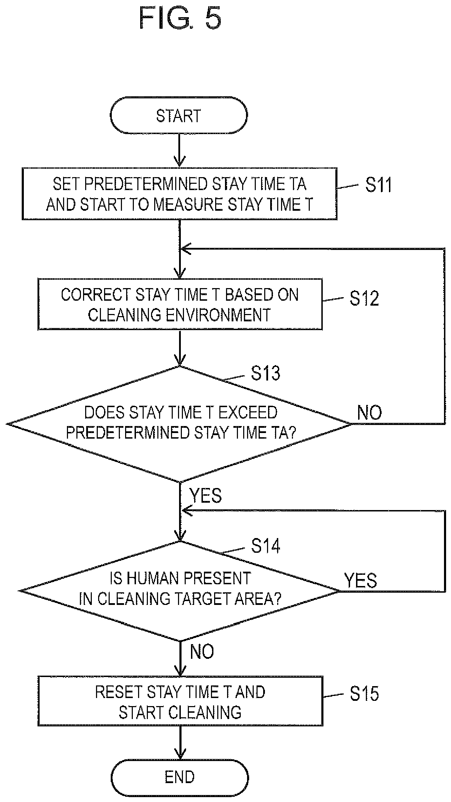

Next, the standby control is described with reference to FIGS. 4 and 5.

FIG. 5 is a flowchart of the standby control.

As shown in FIG. 5, controller 71 sets predetermined stay time TA first and starts to measure human stay time T (step S11). Predetermined stay time TA is an estimated time during which a certain amount of dust is accumulated in a cleaning target area by human behaviors. The certain amount of dust is preferably set based on a capacity of wastebasket 50. In this case, controller 71 sets predetermined stay time TA based on, for example, the amount of dust collected by previous cleaning. Predetermined stay time TA may be set based on an average of the amounts of dust collected by a plurality of cycles of cleaning.

Specifically, for example, as the amount of dust or the average of the amounts of dust is larger, controller 71 sets predetermined stay time TA to be shorter. For example, if dust detection sensor 85 has a value of 80% or more of the capacity of wastebasket 50, predetermined stay time TA is set to be short, or 60% of an initial value. Consequently, when a rate of increase of dust in the cleaning target area is high, cleaner 10 can start cleaning at an early stage. That is, as predetermined stay time TA is set to be short, or 60% of an initial value, a cycle of starting cleaning is reduced accordingly, and thus cleaning starts at an early stage. It is possible to prevent the amount of dust collected in wastebasket 50 (see FIG. 2) from excessively increasing. It is thus possible to reduce a frequency in which cleaning does not start appropriately because of an excessive increase in the amount of dust relative to the capacity of wastebasket 50. That is, as predetermined stay time TA is set to be short, or 60% of an initial value, the cycle of starting cleaning is reduced accordingly. Frequency of disposing dust collected in wastebasket 50 thus increases. It is thus possible to prevent the amount of dust collected in wastebasket 50 from excessively increasing. It is thus possible to reduce the frequency in which cleaning does not start appropriately because of an excessive increase in the amount of dust relative to the capacity of wastebasket 50.

Next, controller 71 corrects stay time T based on a cleaning environment that correlates with generation of dust (step S12). The cleaning environment includes, for example, a number of humans or a human activity level in the cleaning target area, or a time during which a pet stays in the cleaning target area, and the like. For example, when a human cooks, plays, or exercises, it is determined that the human activity level is high.

That is, in the cleaning target area, when the number of humans increases, when the human activity level is high, and when the time during which a pet stays increases, it is assumed that a chance of dust generation may increase and the amount of dust generated may also increase.

Controller 71 thus corrects stay time T based on the cleaning environment that correlates with generation of dust. Specifically, as the number of humans, the human activity level, and the time during which a pet stays in the cleaning target area are increased, controller 71 corrects stay time T to be long. For example, stay time T is corrected in a manner that an increase rate of stay time T in a period during which two humans stay in the cleaning target area is twice as high as an increase rate of stay time T in a period during which one human stays in the cleaning target area.

Next, controller 71 determines whether stay time T exceeds predetermined stay time TA (step S13). If it is determined that stay time T is equal to or less than predetermined stay time TA (NO in step S13), controller 71 returns the process to step S12 and continues to measure stay time T and correct stay time T.

On the other hand, if it is determined that stay time T exceeds predetermined stay time TA (YES in step S13), controller 71 determines whether a human is present in the cleaning target area based on a signal from detector 86 (step S14). If it is determined that a human is not present in the cleaning target area (NO in step S14), controller 71 resets stay time T and cleaner 10 starts cleaning (step S15).

On the other hand, if it is determined that a human is present in the cleaning target area (YES in step S14), controller 71 repeats a process of step S14 every predetermined period. As long as a human is present in the cleaning target area, start of cleaning is postponed and a standby state of cleaner 10 is kept.

The standby control is executed as described above.

Next, the cleaning control is described with reference to FIGS. 4 and 6 to 9.

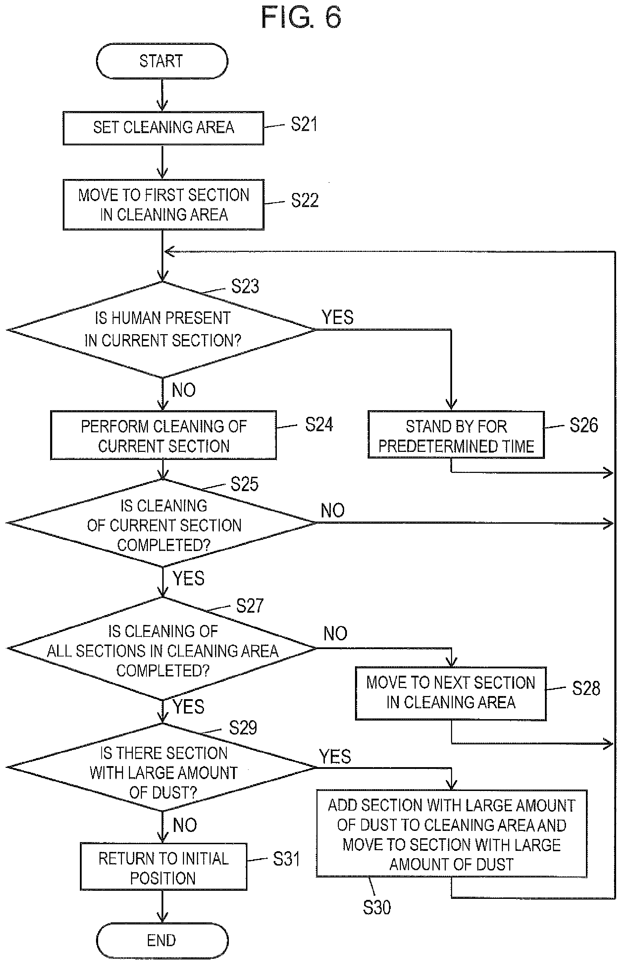

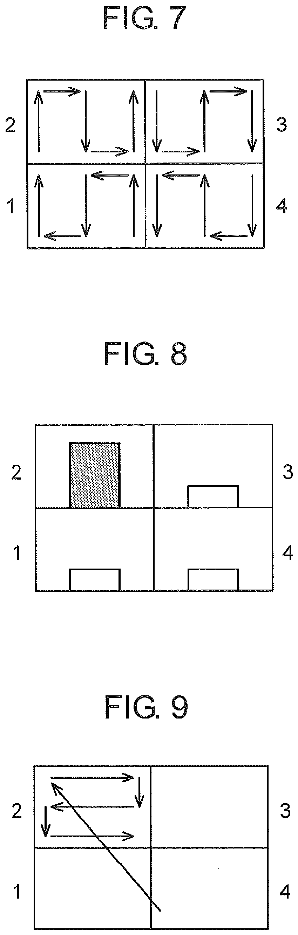

FIG. 6 is a flowchart of the cleaning control. FIG. 7 is a schematic diagram of a first example of a movement route of a cleaner during the cleaning control. FIG. 8 is a graph of an amount of dust collected in each section during the cleaning control. FIG. 9 is a schematic diagram of a second example of the movement route of the cleaner during the cleaning control.

As shown in FIG. 6, controller 71 sets a cleaning area where cleaning is performed in a cleaning target area (step S21). The cleaning area is selected from a map of the cleaning target area stored in storage unit 72 in advance. The cleaning area includes a section in which cleaning is performed and an order of sections in which cleaning is performed. For example, controller 71 sets the cleaning area in a manner that section 1, section 2, section 3, and section 4 shown in FIG. 7 are cleaned in this order.

Next, controller 71 moves cleaner 10 to a first section (for example, section 1 shown in FIG. 7) in the cleaning area (step S22).

Controller 71 then determines whether a human is present in the current section to which cleaner 10 has been moved (step S23). If it is determined that a human is present in the section (YES in step S23), controller 71 causes cleaner 10 to stand by for a predetermined time (step S26) and performs again a determination operation in step S23.

On the other hand, if it is determined that a human is not present in the section (NO in step S23), controller 71 starts cleaning of the current section to which cleaner 10 has been moved (step S24). Controller 71 then determines whether cleaning of the section is completed (step S25).

A specific cleaning operation of cleaner 10 is described below.

Controller 71 drives a wheel drive motor and a brush drive motor (both are not shown) for the purpose of performing cleaning.

That is, controller 71 drives the wheel drive motor to rotate drive wheels 31 for the purpose of moving cleaner 10, for example, forward. To move cleaner 10 forward, controller 71 rotates left and right drive wheels 31 in a same direction. Meanwhile, to move cleaner 10 right or left, controller 71 rotates one of left and right drive wheels 31 to turn cleaner 10 approximately 90 degrees, for example. Left and right drive wheels 31 are then rotated in the same direction, so that cleaner 10 is moved right or left.

At the same time, controller 71 rotates main brush 41 in a direction of a forward movement of cleaner 10. In addition, controller 71 rotates side brushes 42 in a direction from the front of cleaner 10 toward main brush 41. Controller 71 thus moves cleaner 10 frontward and rearward, and left and right in a reciprocating manner in the section along arrows shown in section 1 of FIG. 7, so that cleaning is performed. In this case, dust detection sensor 85 detects an amount of dust during cleaning.

Next, controller 71 performs cleaning in the current cleaning section until the amount of dust collected is equal to or less than a certain amount, based on a detection signal from dust detection sensor 85. Controller 71 stores, in storage unit 72, a position of a section being cleaned, a reciprocating direction of cleaner 10, and an amount of dust detected.

In the cleaning control, while cleaner 10 performs cleaning, controller 71 further executes first to third cleaning control to be described below.

The first cleaning control is executed based on a detection signal from floor surface detection sensor 84 when cleaner 10 is moving on any path on a floor surface. Specifically, in the first cleaning control, a type of the floor surface is determined based on the detection signal from floor surface detection sensor 84, and based on a determination result, controller 71 adjusts suction force of suction unit 60. For example, when the floor surface is flooring, controller 71 reduces an airflow (suction force) generated by suction unit 60. As the floor surface have larger irregularities such as a tatami mat and a carpet, controller 71 increases the airflow generated by suction unit 60 relative to the airflow for the flooring.

The second cleaning control is executed based on a detection signal from floor surface detection sensor 84 when an area with a large amount of dust is detected. Specifically, in the second cleaning control, the type of the floor surface is determined based on the detection signal from floor surface detection sensor 84, and based on a determination result, a cleaning operation of cleaner 10 for intensively sucking dust is determined.

In the third cleaning control, body 20 is moved along a wall to a corner to suck dust along the wall and at the corner in the cleaning target area. That is, the third cleaning control moves cleaner 10 along a wall so as to keep a fixed distance between side part 20C of body 20 and the wall.

The first cleaning control may be executed in combination with one or plural of the second cleaning control, the third cleaning control, and other cleaning control for operating suction unit 60.

The first to third cleaning control processes are performed as described above.

Next, as shown in FIG. 6, if it is determined that cleaning of the current section is not completed (NO in step S25), controller 71 returns to step S23 and performs subsequent steps. In this case, if it is determined that a human is present in the section currently being cleaned (YES in step S23), controller 71 causes cleaner 10 to stand by for a predetermined time (step S26).

On the other hand, if it is determined that cleaning of the current section is completed (YES in step S25), controller 71 determines whether cleaning of all the sections (for example, sections 1 to 4 shown in FIG. 7) in the cleaning area is completed (step S27). If it is determined that cleaning of all the sections in the cleaning area is not completed (NO in step S27), controller 71 moves to a next section being subsequently cleaned (for example, section 2 shown in FIG. 7) in the cleaning area (step S28). Controller 71 then controls cleaner 10 so as to repeatedly perform steps S23 to S27 described above in the next section.

On the other hand, if it is determined that cleaning of all the sections in the cleaning area is completed (YES in step S27), controller 71 determines whether there is a section with a large amount of dust in the cleaning area (step S29). If it is determined that there is a section with a large amount of dust (YES in step S29), controller 71 adds the section with a large amount of dust to the cleaning area and moves cleaner 10 to the section with a large amount of dust (step S30). Controller 71 then controls cleaner 10 so as to repeatedly perform steps S23 to S27 in the section with a large amount of dust.

A cleaning operation of cleaner 10 is specifically described below by taking a case where section 2 shown in, for example, FIG. 8 has a large amount of dust as an example.

In this case, controller 71 performs cleaning on all the sections in steps S21 to S27 shown in FIG. 6 and then newly adds section 2 to the cleaning area in step S30. That is, controller 71 controls cleaner 10 in a manner that cleaner 10 cleans section 1, section 2, section 3, and section 4 and then cleans section 2 again.

For example, cleaning of added section 2 may be performed by a cleaning operation different from initial cleaning, as shown in FIG. 9. That is, as shown in FIG. 9, a movement route of cleaner 10 is turned 90 degrees from the initial movement route of cleaner 10 shown in FIG. 7 and then cleaning is performed in the same manner. It is thus possible to efficiently collect dust that cannot be collected by initial cleaning.

Controller 71 then transmits data indicating a relationship between a section shown in FIG. 8 and an amount of dust to display device 110 for the purpose of displaying the data on display unit 111. It is thus possible to inform a user of a place with a lot of dust. In addition, the place with a lot of dust is cleaned for many times, and thus it is possible to inform a user of efficient cleaning.

The cleaning operation is performed on a section with a large amount of dust as described above.

On the other hand, if it is determined that there is no section with a large amount of dust (NO in step S29), controller 71 returns cleaner 10 to an initial position (step S31).

Controller 71 then ends the cleaning operation.

Next, controller 71 executes the standby control on cleaner 10 at the initial position until stay time T exceeds predetermined stay time TA again in the standby control shown in FIG. 5. Controller 71 updates the data indicating the relationship between the section shown in FIG. 8 and the amount of dust to an amount of dust in the last cleaning of each section. Controller 71 then transmits updated data to display device 110 for the purpose of displaying the updated data on display unit 111. It is thus possible to inform a user of a reduction in dust.

The cleaning control is executed as described above.

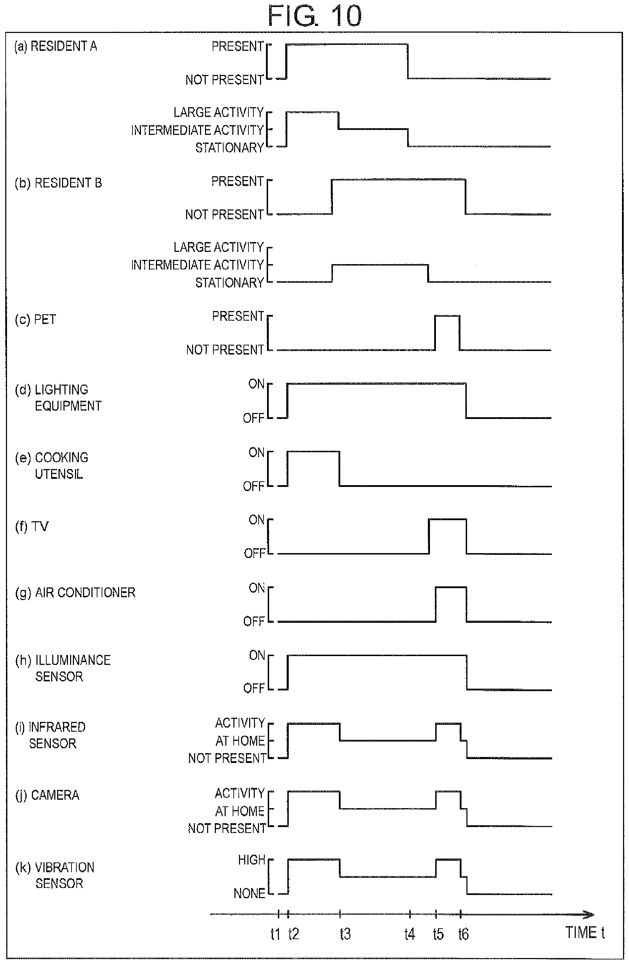

An operation of cleaning system 1 including an autonomous vacuum cleaner provided with the control device according to the present exemplary embodiment is described below with reference to FIG. 10.

An amount of dust is generally affected by factors related with generation of dust in a cleaning target environment. The factors include, for example, contents of a human behavior, a human activity level, and the like. For example, sitting, resting, walking, cooking, and the like are classified as the contents of a human behavior. The amount of dust generated in the cleaning target environment can thus be estimated based on the contents of a human behavior.

FIG. 10 is a timing chart of an example of a relationship between a human behavior in a cleaning target area and a detected value detected by a detector.

Specifically, a house is assumed in FIG. 10, where resident A and resident B having a pet live in a cleaning target area. FIG. 10 is a timing chart of a relationship between a change over time in a cleaning environment and detector 86 capable of detecting information about a human behavior.

The cleaning target area includes, for example, a living room, a dining room, a kitchen, and the like. For example, detector 86 includes an infrared sensor, an illuminance sensor, a camera, a vibration sensor, and the like. Controller 71 of control unit 70 detects a human behavior based on detection signals from the sensors mentioned above.

As shown in (a) to (d) of FIG. 10, first, a time period from time t1 to time t2 indicates a period during which residents A and B and the pet do not stay in the cleaning target area and lighting equipment in the house is switched on.

In this case, an infrared sensor shown in (i) of FIG. 10 does not detect heat from the lighting equipment.

An illuminance sensor shown in (h) of FIG. 10 does not detect a switch-on (ON) state of the lighting equipment, because the lighting equipment has low illuminance. A camera shown in (j) of FIG. 10 does not detect an object recognized as a human in the cleaning target area, and thus controller 71 does not detect a human. A vibration sensor shown in (k) of FIG. 10 does not detect vibrations in the cleaning target area.

Next, a time period from time t2 to time t3, which is shown in FIG. 10, indicates a period during which resident A stays in the cleaning target area and resident B and the pet do not stay in the cleaning target area.

In this case, as shown in (d) and (e) of FIG. 10, resident A switches on the lighting equipment in the room and uses cooking utensils in a kitchen. The infrared sensor shown in (i) of FIG. 10 thus detects a human, and controller 71 detects a high behavior level of the human staying in the area. In this case, the infrared sensor also detects heat from the lighting equipment. However, controller 71 does not recognize the lighting equipment as a human, because a position and a thermal distribution of the lighting equipment are not displaced and moved.

The illuminance sensor shown in (h) of FIG. 10 detects the lighting equipment switched on by resident A. The camera shown in (j) of FIG. 10 detects an object recognized as a human in the cleaning target area. Controller 71 thus detects a human based on a detection result of the camera. The vibration sensor shown in (k) of FIG. 10 detects vibrations due to a behavior of resident A in the cleaning target area.

Next, a time period from time t3 to time t4, which is shown in FIG. 10, indicates a period during which residents A and B stay in the cleaning target area and the pet does not stay in the cleaning target area.

In this case, for example, residents A and B are eating a meal in a dining room. The infrared sensor shown in (i) of FIG. 10 thus detects a human, and controller 71 detects an intermediate activity level of the human staying in the area. The infrared sensor also detects heat from the lighting equipment. However, controller 71 does not recognize the lighting equipment as a human, because the position and the thermal distribution of the lighting equipment detected by the infrared sensor are not displaced and moved.

The illuminance sensor shown in (h) of FIG. 10 detects the lighting equipment that has been switched on. The camera shown in (j) of FIG. 10 detects an object recognized as a human in the cleaning target area. Controller 71 thus detects a human based on a detection signal from the camera. The vibration sensor shown in (k) of FIG. 10 detects vibrations due to behaviors of residents A and B in the cleaning target area. In this case, the vibration sensor detects an intermediate level of vibrations, because the humans are eating meals.

Next, a time period from time t4 to time t5, which is shown in FIG. 10, indicates a period during which resident A moves outside the cleaning target area and resident B stays in the cleaning target area.

In this case, controller 71 detects an intermediate activity level of resident B shown in (b) of FIG. 10 based on a detection signal from the vibration sensor.

Next, a time period from time t5 to time t6, which is shown in FIG. 10, indicates a period during which resident B and the pet stay in the cleaning target area.

In this case, resident B operates an air conditioner and a television in a living room. The infrared sensor shown in (i) of FIG. 10 thus detects a human and a pet, and controller 71 detects a low activity level of the human staying in the area, that is, the human is in a stationary state. The infrared sensor also detects heat from the lighting equipment and the air conditioner. However, controller 71 does not recognize the lighting equipment and the air conditioner as a human, because the position and the thermal distribution of the lighting equipment or the air conditioner are not displaced and moved.

The illuminance sensor shown in (h) of FIG. 10 detects the lighting equipment that has been switched on. The camera shown in (j) of FIG. 10 detects objects recognized as a human and a pet in the cleaning target area. Controller 71 thus detects a human and a pet based on a detection signal from the camera. The vibration sensor shown in (k) of FIG. 10 detects vibrations due to behaviors of resident B and the pet in the cleaning target area.

As described above with reference to FIG. 10, outputs of detector 86 constituted by the various sensors correlate with the contents of a human activity in the cleaning target area.

That is, as stay time T of a human in a cleaning target area is longer and as a human activity level is higher, the amount of dust generated generally tends to increase. For example, when a human does a hard exercise in the cleaning target area, dust is generated, for example, from a carpet, a cloth, and the like. Controller 71 thus causes cleaner 10 to perform cleaning based on an output of detector 86 that correlates with a human behavior. It is thus possible to appropriately perform cleaning based on the amount of dust.

Controller 71 corrects stay time T based on the number of humans, the human activity level, and the time during which a pet stays in the cleaning target area. Corrected stay time T is, for example, accumulated to detected values from the infrared sensor shown in (i) of FIG. 10. As compared to a case where stay time T is not corrected, it is thus possible to determine more appropriately the amount of dust generated in the cleaning target area and to start cleaning at a more appropriate timing.

### (Second Exemplary Embodiment)

Configurations of a control device for autonomous vacuum cleaner 10, autonomous vacuum cleaner 10 provided with the control device, and cleaning system 1 provided with the control device and autonomous vacuum cleaner 10 according to a second exemplary embodiment are described below with reference to FIGS. 4, 11, and 12. The same reference numerals as those in the first exemplary embodiment will be given to configurations common to those of the first exemplary embodiment, and descriptions thereof will be omitted.

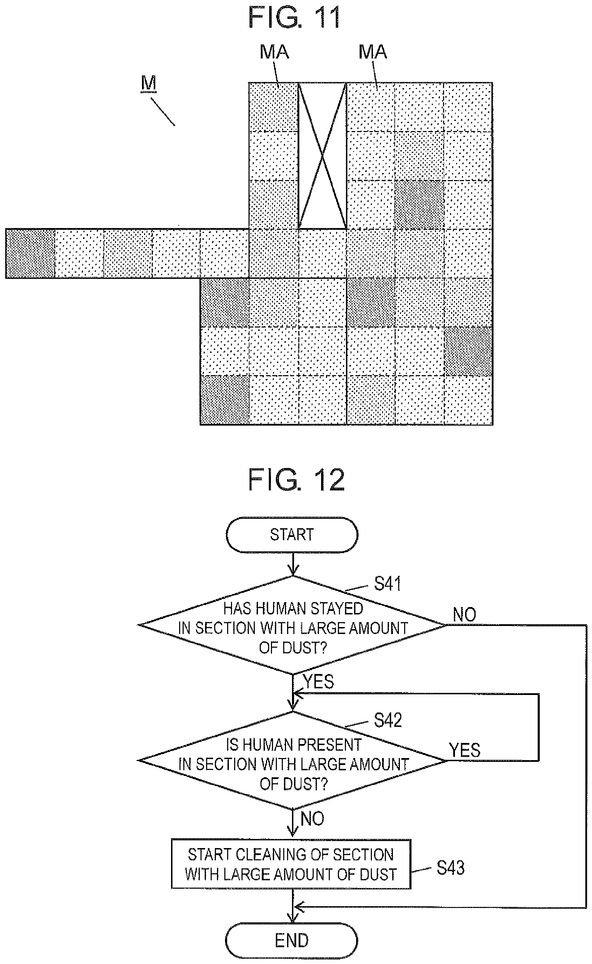

FIG. 11 is a map of an amount of dust in each section of a cleaning target area, the map being created by a controller according to the second exemplary embodiment. FIG. 12 is a flowchart of cleaning control according to the second exemplary embodiment.

Controller 71 of control unit 70 in autonomous vacuum cleaner 10 according to the present exemplary embodiment controls cleaner 10 based on an amount of dust collected in each section.

In this case, controller 71 (see FIG. 4) of control unit 70 constituting the control device stores, in storage unit 72, the amount of dust collected in each section of a cleaning target area. Specifically, storage unit 72 stores data of a distribution of the amount of dust in which each section defined based on the map, which is shown in FIG. 11, is related with the amount of dust collected in each section.

FIG. 11 schematically shows map M indicating the distribution of the amount of dust in which each section MA is related with the amount of dust collected in each section MA. Referring to FIG. 11, the amount of dust collected is represented by shading that varies according to a number of dots. More dense section MA represents section MA with a larger amount of dust.

The amount of dust collected may be the amount of dust collected by previous cleaning or may be an average of the amounts of dust collected by a plurality of cycles of cleaning.

Controller 71 then transmits map M shown in FIG. 11 to display device 110 for the purpose of displaying the map on display unit 111.

That is, cleaner 10 according to the present exemplary embodiment performs cleaning in the cleaning target area based on map M stored in storage unit 72.

The cleaning control executed by controller 71 based on map M is described below with reference to FIG. 12.

As shown in FIG. 12, controller 71 determines whether a human has stayed in section MA that is stored in storage unit 72 as a section with a large amount of dust (step S41). Specifically, controller 71 detects section MA where the amount of dust is equal to or larger than a threshold based on an output of dust detection sensor 85 during standby control. If controller 71 detects section MA where the amount of dust is equal to or larger than a threshold, controller 71 determines that a human has stayed in section MA. Controller 71 preferably determines that a human has stayed in a detected section if a human is detected in section MA for a predetermined time or longer.

In this case, if it is determined that a human has not stayed in stored section MA with a large amount of dust (NO in step S41), controller 71 determines that stored section MA has a less amount of dust and temporarily ends the process. After a predetermined period, controller 71 performs the process from step S41 again.

On the other hand, if it is determined that a human has stayed in stored section MA with a large amount of dust (YES in step S41), controller 71 determines whether a human is present in determined section MA (step S42). If it is determined that a human is present (YES in step S42), controller 71 repeats the determination process of step S42 until the human moves out of section MA.

On the other hand, if it is determined that a human is not present in determined section MA (NO in step S42), cleaner 10 moves to section MA and cleaner 10 starts cleaning (step S43).

According to the present exemplary embodiment, if a human is present in a cleaning target area, controller 71 causes cleaner 10 to perform cleaning based on a position in the cleaning target area where the human stays. It is thus possible to prevent interference of cleaner 10 with a human. That is, if a human is present in an area that has had a large amount of dust in the past, the area must be cleaned after the human moves out of the area. The human present in the area that has had a large amount of dust in the past thus feels like cleaner 10 waits for the human to move out of the area. That is, the human is uncomfortable because the human feels like being interfered with cleaner 10. On the other hand, according to the present exemplary embodiment, in a case where a human is present in an area, if cleaner 10 determines that the area has had a less amount of dust in the past, cleaner 10 stops cleaning of the area and then quickly moves to other areas. It is thus possible to prevent the human from being uncomfortable because of the interference such as the feeling that the human feels like the cleaner waits for the human to move out.

### (Third Exemplary Embodiment)

Configurations of a control device for autonomous vacuum cleaner 10, autonomous vacuum cleaner 10 provided with the control device, and cleaning system 1 provided with the control device and autonomous vacuum cleaner 10 according to a third exemplary embodiment are described below with reference to FIGS. 3, 4, 11, and 13. The same reference numerals as those in the first exemplary embodiment will be given to configurations common to those of the first exemplary embodiment, and descriptions thereof will be omitted.

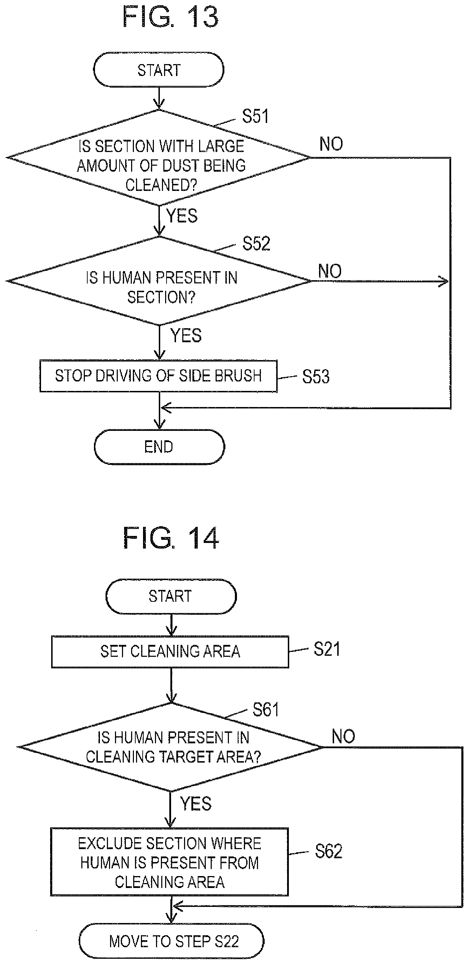

FIG. 13 is a flowchart of brush control according to the third exemplary embodiment.

That is, controller 71 of control unit 70 in autonomous vacuum cleaner 10 according to the present exemplary embodiment controls side brush 42 based on a stay position of a human.

In the present exemplary embodiment, controller 71 causes cleaner 10 to start cleaning when human stay time T described with reference to FIG. 5 exceeds predetermined stay time TA or based on an operation instruction of a user. In the present exemplary embodiment, the process in step S14 shown in FIG. 5 is preferably omitted. Consequently, if a human is present in an area that is not cleaned for a long time and hinders cleaning, a cleaner can perform cleaning with the highest priority.

That is, controller 71 according to the present exemplary embodiment executes brush control on cleaning unit 40 during cleaning based on section MA being cleaned and the stay position of a human.

The brush control executed by controller 71 is described below with reference to FIG. 13. The brush control is repeatedly executed every predetermined period while cleaner 10 drives cleaning unit 40 to perform cleaning.

As shown in FIG. 13, first, controller 71 determines whether section MA with a large amount of dust is being cleaned (step S51). Specifically, controller 71 determines whether the amount of dust in section MA currently being cleaned is equal to or larger than a threshold based on a detection signal from dust detection sensor 85.

If it is determined that section MA with a large amount of dust is being cleaned (YES in step S51), controller 71 determines whether a human is present in section MA being cleaned (step S52). If it is determined that a human is present in section MA being cleaned (YES in step S52), controller 71 stops driving of side brush 42 in cleaning unit 40 (step S53). Consequently, when a human is present in section MA with a large amount of dust, it is possible to prevent side brush 42 from flicking off dust.

On the other hand, if it is determined that section MA with a large amount of dust is not being cleaned (NO in step S51) and that a human is not present in section MA being cleaned (NO in step S52), controller 71 does not stop driving of side brush 42 and continues cleaning.

If driving of side brush 42 is stopped (step S53), when cleaner 10 moves to next section MA and starts cleaning, controller 71 drives side brush 42 again to perform cleaning.

### (Fourth Exemplary Embodiment)

Configurations of a control device for autonomous vacuum cleaner 10, autonomous vacuum cleaner 10 provided with the control device, and cleaning system 1 provided with the control device and autonomous vacuum cleaner 10 according to a fourth exemplary embodiment are described below with reference to FIGS. 4 to 6 and 14. The same reference numerals as those in the first exemplary embodiment will be given to configurations common to those of the first exemplary embodiment, and descriptions thereof will be omitted.

FIG. 14 is a flowchart of cleaning control according to the fourth exemplary embodiment.

That is, controller 71 of control unit 70 in autonomous vacuum cleaner 10 according to the present exemplary embodiment sets a cleaning area based on a position in a cleaning target area where a human stays and performs cleaning.

In the present exemplary embodiment, controller 71 causes cleaner 10 to start cleaning when human stay time T described with reference to FIG. 5 exceeds predetermined stay time TA or based on an operation instruction of a user. In the present exemplary embodiment, the process in step S14 shown in FIG. 5 is preferably omitted. Consequently, if a human is present in an area that is not cleaned for a long time and hinders cleaning, a cleaner can perform cleaning with the highest priority.

The cleaning control executed by controller 71 according to the present exemplary embodiment is described below with reference to FIGS. 6 and 14.

Similarly to step S21 shown in FIG. 6, controller 71 sets a cleaning area where cleaning is performed in a cleaning target area (step S21).

Next, controller 71 determines whether a human is present in the cleaning target area (step S61). If it is determined that a human is present in the cleaning target area (YES in step S61), a section in which a human is present is excluded from the cleaning area (step S62) and the process proceeds to step S22 shown in FIG. 6 and performs subsequent steps.

On the other hand, if it is determined that a human is not present in the cleaning target area (NO in step S61), the process proceeds to step S22 shown in FIG. 6 and performs the subsequent steps.

Consequently, when cleaning starts, for example, while a user is watching a television in a living room, controller 71 excludes the living room from the cleaning area. As a result, when a human is present in the cleaning target area, cleaning is completed in a shorter time as compared to a case where all the sections are set as the cleaning area. The cleaning area where a human is present is excluded from the cleaning target area, and thus it is possible to prevent the interference of cleaner 10 with the human.

### (Fifth Exemplary Embodiment)

Configurations of a control device for autonomous vacuum cleaner 10, autonomous vacuum cleaner 10 provided with the control device, and cleaning system 1 provided with the control device and autonomous vacuum cleaner 10 according to a fifth exemplary embodiment are described below with reference to FIGS. 4, 15, and 16. The same reference numerals as those in the first exemplary embodiment will be given to configurations common to those of the first exemplary embodiment, and descriptions thereof will be omitted.

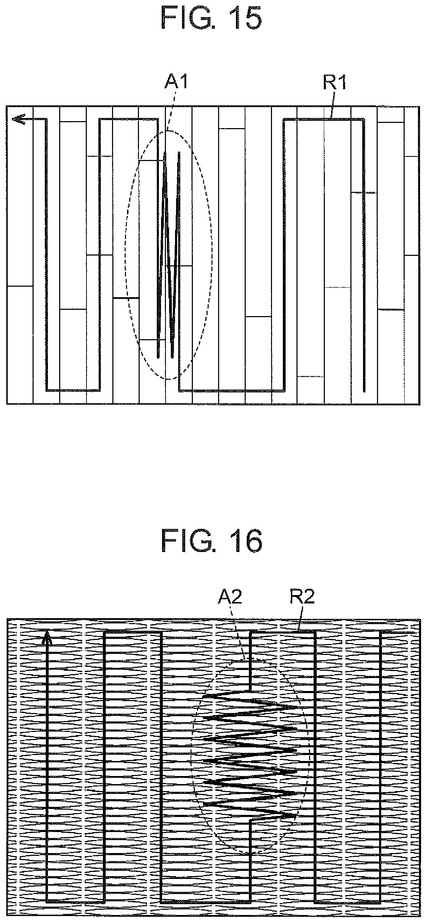

FIG. 15 is a schematic diagram of an example of a movement route of cleaner 10 when cleaner 10 cleans flooring. FIG. 16 is a schematic diagram of an example of a movement route of cleaner 10 when cleaner 10 cleans tatami mats.

That is, controller 71 of control unit 70 in autonomous vacuum cleaner 10 according to the present exemplary embodiment controls cleaner 10 based on a state of grooves of a floor surface.

The cleaning control executed by controller 71 according to the present exemplary embodiment is described below.

Controller 71 detects first a groove of a floor surface based on outputs of floor surface detection sensors 84 on bottom surface 20A of body 20.

Specifically, controller 71 generates image information of the floor surface based on information of irregularities on the floor surface. Controller 71 compares the generated image information with a reference image stored in storage unit 72 in advance to determine a type of the floor surface.

For example, when a dark-shaded and relatively long line is observed from the generated image information, controller 71 determines that the floor surface is flooring or tiles. Meanwhile, when a dark-shaded and relatively short line is observed from the generated image information, controller 71 determines that the floor surface is tatami mats. In this case, controller 71 identifies the type of the floor surface and further detects a linearly extending portion as a groove.

When controller 71 detects a groove of the floor surface during cleaning, controller 71 controls cleaner 10 to move cleaner 10 forward and rearward along a direction that the groove of the floor surface extends. Dust accumulated in the groove can thus be collected efficiently.

Next, a specific description is given on the cleaning control executed by controller 71 based on the state of the floor surface when a groove is detected, with reference to FIGS. 15 and 16.

A case where the floor surface is flooring is described first with reference to FIG. 15.

FIG. 15 shows movement route R1 of cleaner 10 when cleaner 10 cleans the floor surface, which is flooring.

That is, when it is determined from a detection result of floor surface detection sensor 84 that the floor surface is flooring, controller 71 moves cleaner 10 based on movement route R1 that is set in advance and formed in a rectangular wave shape. In this case, when dust detection sensor 85 determines that the amount of dust collected in flooring area A1 is larger than a predetermined value, controller 71 moves cleaner 10 frontward and rearward for a plurality of times along joints of the flooring, which are grooves.

When the amount of dust collected is equal to or less than the predetermined value, controller 71 ends cleaning of area A1. Controller 71 then moves cleaner 10 again based on movement route R1 that is set in advance and formed in a rectangular wave shape.

The cleaning operation is performed along grooves of the flooring as described above.

Next, a case where the floor surface is tatami mats is described first with reference to FIG. 16.

FIG. 16 shows movement route R2 of cleaner 10 when cleaner 10 cleans the floor surface, which is tatami mats.

That is, when it is determined from a detection result of floor surface detection sensor 84 that the floor surface is tatami mats, controller 71 moves cleaner 10 based on movement route R2 that is set in advance and formed in a rectangular wave shape. In this case, when dust detection sensor 85 determines that the amount of dust collected in tatami mats area A2 is larger than a predetermined value, controller 71 moves cleaner 10 frontward and rearward for a plurality of times along joints of the tatami mats, which are grooves.

When the amount of dust collected is equal to or less than the predetermined value, controller 71 ends cleaning of area A2. Controller 71 then moves cleaner 10 again based on movement route R2 that is set in advance and formed in a rectangular wave shape.

The cleaning operation is performed along grooves of the tatami mats as described above.

According to the present exemplary embodiment, when a large amount of dust is present in joints such as grooves, controller 71 causes cleaner 10 to perform the cleaning operation along the grooves. The amount of dust on the floor surface is thus reduced efficiently.

### (Modifications)

The above exemplary embodiments have described examples that can be assumed by the cleaning system, however, the above exemplary embodiments are not limiting.

In other words, for example, the cleaning system of the present exemplary embodiment can include, in addition to the above exemplary embodiments, the following modifications and any mode resulting from a combination of at least two modifications that are mutually consistent.

Specifically, the configuration of cleaning system 1 may be freely changed.

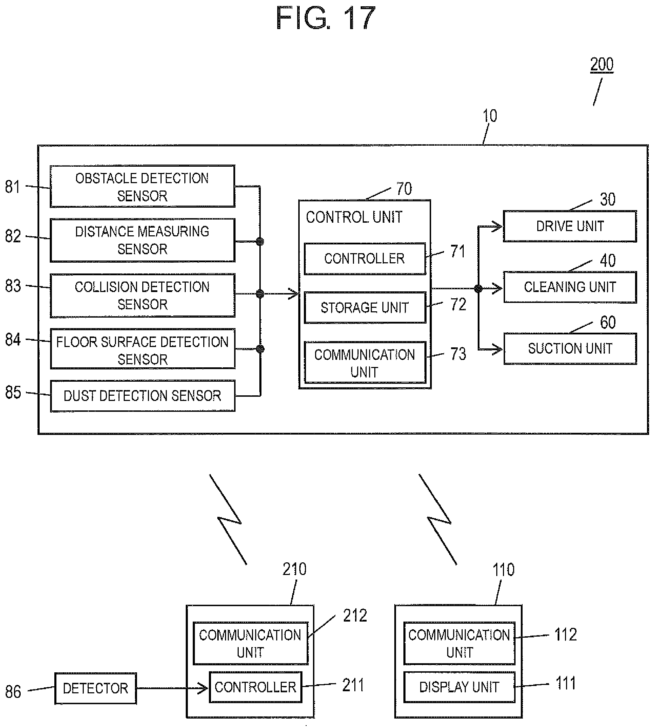

For example, as shown in FIG. 17, cleaning system 200 may be configured to include cleaner 10, server 210 outside of cleaner 10, and detector 86 outside of cleaner 10. Server 210 includes controller 211 that executes various control and communication unit 212 communicable with communication unit 73 of cleaner 10. For example, detector 86 is installed in an air conditioner, lighting equipment, a ceiling, or a wall in a cleaning target area. Detector 86 outputs signals including information about a human behavior to controller 211 of server 210. In this case, controller 211 of server 210 may be configured to control cleaner 10 based on the information about a human behavior.

In addition, a cleaning system may be configured in a manner that detector 86 is, for example, provided in charger 100 shown in FIG. 1. When detector 86 is provided in charger 100, the cleaning system is constituted by cleaner 10 and charger 100.

An operation of starting cleaning control performed by controller 71 may be freely changed.

For example, controller 71 calculates a behavior pattern of a human in a cleaning target area based on the information about a human behavior stored in storage unit 72. Specifically, when it is determined that the information about a human behavior shown in FIG. 10 is repeated in the cleaning target area, controller 71 stores behaviors of resident A and resident B shown in FIG. 10 as a behavior pattern in storage unit 72.

Controller 71 then starts cleaning by cleaner 10 based on the stored behavior pattern. For example, controller 71 may set cleaner 10 to start cleaning in a period of time during which stay time T of a human in the cleaning target area exceeds predetermined stay time TA and a human does not stay in the cleaning target area in a behavior pattern. Alternatively, controller 71 may set cleaner 10 to start cleaning in a section of the cleaning target area where a human does not stay when stay time T of a human in the cleaning target area exceeds predetermined stay time TA in a behavior pattern.

A configuration of floor surface detection sensor 84 may be freely changed.

For example, a camera or an ultrasonic sensor may be used as floor surface detection sensor 84. That is, any sensor capable of detecting a floor surface may be used. While the exemplary embodiments exemplify an active sensor as floor surface detection sensor 84, a passive sensor such as an image sensor used for copy machines may be used.

A configuration of controller 71 may be freely changed.

For example, controller 71 may form a course for cleaning section MA with a large amount of dust with higher priority. In this case, a user can select the formed course to clean only section MA with a large amount of dust. It is thus possible to reduce a cleaning period. Controller 71 may set in advance a cleaning mode in storage unit 72 based on a cleaning period. When the set cleaning mode is performed, controller 71 may set section MA with a large amount of dust in previous cleaning as a cleaning area with higher priority to perform cleaning.

A method of setting a cleaning area in cleaning control may be freely changed.

For example, with the amount of dust collected in each section in the cleaning target area by previous cleaning and an initial position, controller 71 may set the cleaning area based on a human stay position during a period in which cleaner 10 is in a standby state. That is, during the period in which cleaner 10 is in a standby state, if the human stay position is included in a section with a large amount of dust collected by previous cleaning, it is highly possible that dust is generated in the section. When the human stay position is included in the section with a large amount of dust collected by previous cleaning during the period in which cleaner 10 is in a standby state, controller 71 sets the cleaning area so as to include at least the section. A section where dust is easily generated can be cleaned with higher priority, and thus it is possible to reliably clean a place with a large amount of dust.

Contents of the standby control may be freely changed.

For example, when stay time T exceeds predetermined stay time TA, controller 71 may extend a period during which cleaning is performed (hereinafter, "cleaning period").

Specifically, first, controller 71 starts cleaning by cleaner 10 based on a schedule determined in advance or an operation of a user through an operation panel. If stay time T has exceeded predetermined stay time TA when cleaning starts, controller 71 extends the cleaning period in each section and then performs cleaning. That is, when a thick carpet is cleaned, cleaning is performed for a longer time. It is thus possible to reliably remove human hair and pet hair caught in the carpet from the carpet. As a result, it is possible to prevent biologically derived putrid odor and propagation of bacteria.

In this case, the cleaning period may be set to be long only in a section with long human stay time T. In addition, the cleaning area may be set in a manner that cleaning is performed for a plurality of times on the section with long human stay time T. It is thus possible to prevent interference of cleaner 10 with a human.

Contents of step S12 in the standby control shown in FIG. 5 may be freely changed.

For example, controller 71 may correct stay time TA based on a wind velocity or solar radiation. That is, as the wind velocity is increased, dust is more easily generated in a cleaning target area. In addition, as the wind velocity is increased, dust easily enters from outside. Moreover, as an outdoor wind velocity is increased, dust is easily adhered to clothes of a human playing outdoor activities. For this reason, the human in clothes to which dust adheres moves in the cleaning target area. Controller 71 thus corrects stay time TA to be longer as the wind velocity is increased. That is, if a large amount of dust adheres to clothes and is brought in a house, dust is not accumulated immediately on a floor surface, but removed from the clothes according to a human activity and then accumulated on the floor surface. Stay time TA is thus corrected to be long. Dust accumulated on the floor surface can thus be quickly collected.

The wind velocity is detected by a wind velocity sensor that is installed in a cleaning target area or is installed outdoor.

Dust at ultraviolet wavelengths is also easily generated as solar radiation is increased. Controller 71 thus corrects stay time T to be longer as the solar radiation is increased. That is, plastic products for outdoor use are degraded by ultraviolet light, so that plastic powder dust is generated. Plastic powder dust is brought in a house through clothes. Brought plastic powder is stirred up in a space, and thus a human might inhale plastic powder. Stay time T is thus corrected to be longer as the solar radiation is increased. It is possible to reduce a probability that a human inhales plastic powder and to enhance a cleaning effect.

Predetermined stay time TA in the standby control may be freely set.

For example, predetermined stay time TA may be set by an input operation of a user. That is, as predetermined stay time TA is longer, the amount of dust generated in a cleaning target area before cleaning starts is increased. Controller 71 executes control in a manner that as predetermined stay time TA is set to be longer, the cleaning period is extended or each section is cleaned for a plurality of times. In addition, controller 71 executes control to increase suction force of a suction unit or rotate main brush 41 and side brush 42 in cleaning unit 40 at a high speed. That is, a period of cleaning using a charged battery is finite, and thus it is possible to efficiently perform cleaning within the cleaning period. It is thus possible to improve the amount of dust collected.

For example, when stay time T exceeds predetermined stay time TA in the modifications, an operation of cleaning unit 40 or suction unit 60 may be changed. Specifically, controller 71 starts cleaning by cleaner 10 based on a schedule determined in advance or an operation of a user through an operation panel. When stay time T has exceeded predetermined stay time TA when cleaning starts, controller 71 increases suction force of suction unit 60 or a rotation speed of main brush 41 and side brush 42 in cleaning unit 40. In this case, an operation of cleaning unit 40 or suction unit 60 may be changed only in a section with long human stay time T.

While an example of stopping rotation of side brush 42 in step S53 shown in FIG. 13 is described in the brush control according to the third exemplary embodiment, this example is not limiting. For example, controller 71 may execute control to reduce the rotation speed of side brush 42 in step S53. It is thus possible to reduce stirring up or flicking off of dust during cleaning. As a result, cleaning can be performed without giving an uncomfortable feeling to a human.

In addition, controller 71 may execute control to stop the rotation of side brush 42 in section MA with a large amount of dust regardless of presence of a human. It is thus possible to prevent dust from being flicked off by the rotation of side brush 42.

While an example of excluding a section where a human is present from a cleaning area in step S62 shown in FIG. 14 is described in the cleaning control according to the fourth exemplary embodiment, this example is not limiting. For example, controller 71 may exclude section MA with a less amount of dust from the cleaning area in step S62. Moreover, controller 71 may exclude both section MA where a human is present and section MA with a less amount of dust from the cleaning area. It is thus possible to reduce a time required for cleaning and to reduce loads on a human in a room such as noises and stirring up of dust during cleaning. In addition, it is possible to reduce the interference of a cleaner with a human.

While an example of intensively cleaning only a groove in an area with a large amount of dust is described in the cleaning control according to the fifth exemplary embodiment, this example is not limiting. For example, when a groove is detected on a floor surface, controller 71 may move cleaner 10 to perform cleaning along the groove on the floor surface regardless of the amount of dust detected in the groove. It is difficult to distinguish a groove from dust in the groove such as lead for a mechanical pencil and straight hair. Consequently, when a groove is detected, controller 71 moves cleaner 10 to perform cleaning along the groove on the floor surface. It is thus possible to reliably clean dust in the groove.

While an example of constituting detector 86 by a camera that detects an image of a cleaning target area, an illuminance sensor that detects illuminance of the cleaning target area, a vibration sensor that detects vibrations in the cleaning target area, and the like is described in the exemplary embodiments, the example is not limiting. Any one of an infrared sensor, a camera, an illuminance sensor, and a vibration sensor may be used as detector 86.

While the exemplary embodiments exemplify a passive detector, an active detector may be used. For example, a passive infrared sensor may be configured to include an infrared irradiation function and a laser irradiation function. It is thus possible to improve detection accuracy. In short, any detector capable of detecting information about a human behavior may be used.

A description is first given below on a case of detecting information about a human behavior using a camera as a detector.

A distance image sensor with 320 × 240 pixels is used as the camera. Examples of the distance image sensor include a CMOS (Complementary Metal Oxide Semiconductor Type) image sensor and a QVGA (Quarter-VGA) image sensor.

Specifically, the camera identifies a position of a measurement target based on a distance and a direction.

A human normally moves in a cleaning target area. Changes in images detected by the camera thus include information about a human behavior.

The camera first outputs a detected image to controller 71 as information about a human behavior.

Next, controller 71 determines a human behavior in the cleaning target area based on a detection signal input from the camera. Specifically, controller 71 determines whether an image detected by the camera includes a result recognized as a human. Recognition of a human is made by determining whether an image is present, the image satisfying a ratio of a size and a shape of parts of a human such as a head, an arm, and a foot, which are stored in advance in storage unit 72.

If the image detected by the camera satisfies the ratio of the size and the shape of parts of a human such as a head, an arm, and a foot, which are stored in advance in storage unit 72, controller 71 determines that a human is present in the cleaning target area. Similarly, if the image detected by the camera satisfies the ratio of the size and the shape of parts of a pet such as a head, an arm, and a foot, which are stored in advance in storage unit 72, controller 71 determines that a pet is present in the cleaning target area. In addition, controller 71 determines the activity level of a human present in the cleaning target area based on a movement over time of a human in the image detected by the camera.

Moreover, controller 71 determines which section in the cleaning target area a human stays, based on the image detected by the camera. In this case, controller 71 estimates coordinates in a front-rear direction and in a left-right direction in a measurement target space based on a position of a human's head detected by the image. Controller 71 thus detects the stay position of a human.

Moreover, controller 71 determines the level of a human activity by analyzing over time data of the stay position of a human. Specifically, controller 71 estimates, for example, whether a human is still stationary at a stay position or a human frequently moves. Based on an estimated movement, controller 71 then classifies the level of a human activity as a stationary state, a small activity state, and a large activity state. In this case, controller 71 also determines the activity level of a pet in the same manner as described above.

When a camera is used as a detector, controller 71 creates map M of a cleaning target area in a following procedure.

Specifically, controller 71 first causes the camera to capture a part of the cleaning target area for the purpose of creating a part of map M of the cleaning target area. Next, the operation described above is repeated, so that map M of the overall cleaning target area is created. Controller 71 divides map M into parts of a predetermined size, so that sections MA are formed.

Information about a human behavior can thus be obtained by using a camera as a detector, as described above.

Next, a description is given below on a case of detecting information about a human behavior using an illuminance sensor as a detector.

For example, a sensor obtained by adding an amplifier circuit to a photodiode is used as the illuminance sensor.

A human normally switches on lighting equipment while staying in a cleaning target area. Changes in illuminance detected by the illuminance sensor thus include information about a human behavior.

The illuminance sensor first outputs detected illuminance to controller 71 as information about a human behavior.

Next, controller 71 determines a human behavior in the cleaning target area based on a detection signal input from the illuminance sensor. Specifically, controller 71 determines whether the illuminance detected by the illuminance sensor is equal to or larger than a predetermined value.

If the illuminance detected by the illuminance sensor is equal to or larger than the predetermined value, controller 71 determines that a human is present in the cleaning target area. When there is auxiliary lighting equipment switched on when a human is not present in the cleaning target area, illuminance data of the auxiliary light equipment may be used in determination. It is thus possible to improve accuracy of determination.

When a plurality of pieces of lighting equipment are installed in the cleaning target area, controller 71 may use illuminance data of each piece of lighting equipment at an installation position of the illuminance sensor to determine a human behavior. It is thus possible to determine with higher accuracy which section in the cleaning target area a human is present.

Information about a human behavior can thus be obtained by using an illuminance sensor as a detector, as described above.

Next, a description is given below on a case of detecting information about a human behavior using a vibration sensor as a detector.

For example, a piezoelectric acceleration pickup is used as the vibration sensor.

When a human stays in a cleaning target area, for example, walking of a human and motion of a human normally generate vibrations in the cleaning target area. Vibrations detected by the vibration sensor thus include information about a human behavior.

The vibration sensor first outputs a detected vibration to controller 71 as information about a human behavior.

Next, controller 71 determines a human behavior in the cleaning target area based on a detection signal input from the vibration sensor. Specifically, controller 71 determines whether the vibration detected by the vibration sensor is equal to or larger than a predetermined value.

If the vibration detected by the vibration sensor is equal to or larger than the predetermined value, controller 71 determines that a human is present in the cleaning target area.

The vibration sensor is also capable of detecting vibrations in discontinuous spaces. For example, when the cleaning target area is a house, vibrations in a passage and a next room can be detected. The cleaning target area can thus include, for example, a passage, a next room, and the like.

When a device driven by vibrations is included in the cleaning target area, vibration data of the device may be used to determine a human behavior. It is thus possible to improve the accuracy of determination.

A distance between the vibration sensor and a human may be determined based on magnitude of a vibration. It is thus possible to determine which section in the cleaning target area a human is present.

Based on the magnitude of a vibration, the level of a human activity may be determined as, for example, a stationary state, a small activity state, and a large activity state.

As described above, a control device for an autonomous vacuum cleaner according to the present invention may be configured to include a controller that controls an autonomous vacuum cleaner including a cleaning part collecting dust on a floor surface. The controller may be configured to control the autonomous vacuum cleaner based on information about a behavior of a human in a cleaning target area to be cleaned by the autonomous vacuum cleaner.

This configuration enables the autonomous vacuum cleaner to be controlled based on the information about the behavior of the human in the cleaning target area. It is thus possible to appropriately clean the cleaning target area based on the behavior of the human.

The controller in the control device for an autonomous vacuum cleaner according to the present invention may control, based on the information about the behavior of the human, at least one of a time when the autonomous vacuum cleaner starts cleaning, a section to be cleaned in the cleaning target area, a cleaning period, and an operation of the cleaning part.

This configuration enables at least one of the time when cleaning starts, the section to be cleaned, and the operation of the cleaning part to be controlled based on the behavior of the human in the cleaning target area. It is thus possible to appropriately clean the cleaning target area.

The controller in the control device for an autonomous vacuum cleaner according to the present invention may be configured to calculate a stay time of the human in the cleaning target area based on the information about the behavior of the human, and when the stay time exceeds a predetermined stay time, to cause the autonomous vacuum cleaner to start cleaning.

According to this configuration, as the stay time of the human is longer, the amount of dust generated in the cleaning target area generally tends to increase. Consequently, when the stay time of the human exceeds the predetermined stay time, cleaning starts. It is thus possible to clean the cleaning target area at an appropriate timing.

The controller in the control device for an autonomous vacuum cleaner according to the present invention may correct the stay time based on at least one of a number of humans staying in the cleaning target area and an activity level of the human based on the information about the behavior of the human, and a stay time of a pet in the cleaning target area, and then the controller may execute control.

According to this configuration, as the number of staying humans is larger, as the activity level of a staying human is higher, or as the stay time of a pet is longer, the amount of dust tends to increase. The stay time is thus corrected based on these factors. It is thus possible to clean the cleaning target area at an appropriate timing.

The controller in the control device for an autonomous vacuum cleaner according to the present invention may execute control to postpone starting of cleaning by the autonomous vacuum cleaner when the stay time exceeds the predetermined stay time and the human is present in the cleaning target area.

According to this configuration, even if the stay time of a human exceeds the predetermined stay time, when the human is present in the cleaning target area, starting of cleaning by the autonomous vacuum cleaner is postponed. It is thus possible to reduce uncomfortable feeling felt by a user because cleaning starts in the cleaning target area where the user stays.

The controller in the control device for an autonomous vacuum cleaner according to the present invention may set the predetermined stay time based on an amount of dust collected.

This configuration enables the predetermined stay time to be set based on the amount of dust collected in a cleaning target area. A time when cleaning starts can thus be changed based on the amount of dust. Consequently, it is possible to perform cleaning appropriately.

The control device for an autonomous vacuum cleaner according to the present invention may further include a storage unit. The storage unit may store a relationship between a stay position of the human in a cleaning target area and an amount of dust in the cleaning target area, and the controller may control the autonomous vacuum cleaner based on the stay position and the amount of dust that are stored in the storage unit.

According to this configuration, when a cleaning target area where a human stays and thus a large amount of dust is easily generated, for example an area around a table, is included, the cleaner is controlled based on the stay position of a human and the amount of dust collected at the stay position of a human by previous cleaning. It is thus possible to perform cleaning based on an amount of dust estimated during current cleaning.

The control device for an autonomous vacuum cleaner according to the present invention may include a storage unit. The storage unit may store a distribution of an amount of dust in a cleaning target area. When the human is present in the cleaning target area, the controller may set a cleaning area to be cleaned by the autonomous vacuum cleaner based on the distribution of the amount of dust stored in the storage unit or a stay position of the human in the cleaning target area, to control the autonomous vacuum cleaner.

According to this configuration, the cleaning area is set based on an amount of actually collected dust or a stay position of the human where dust is generated with high possibility. It is thus possible to perform cleaning based on the amount of dust estimated during current cleaning.

The control device for an autonomous vacuum cleaner according to the present invention may include a storage unit that stores information about the behavior of the human. The controller may control the autonomous vacuum cleaner based on a behavior pattern of the human in a cleaning target area that is calculated based on the information about the behavior of the human stored in the storage unit.

This configuration enables the cleaning target area to be appropriately cleaned based on the behavior pattern of the human.

This is because the human has a certain behavior pattern in, for example, a living space. The behavior pattern of the human thus applies a certain pattern to an area where dust is easily generated and a period of time during which dust is easily generated.

The autonomous vacuum cleaner according to the present invention includes the control device for an autonomous vacuum cleaner and a detector that detects the information about the behavior of the human. The detector may be configured to include at least one of a camera that captures an image of a cleaning target area, an infrared sensor that detects infrared light in the cleaning target area, an illuminance sensor that detects illuminance in the cleaning target area, and a vibration sensor that detects a vibration in the cleaning target area.

This configuration achieves similar effects as those described in the control device for an autonomous vacuum cleaner.

The cleaning system according to the present invention includes the autonomous vacuum cleaner, the control device for an autonomous vacuum cleaner, and a detector that detects information about the behavior of the human. The detector may be configured to include at least one of a camera that captures an image of a cleaning target area, an infrared sensor that detects infrared light in the cleaning target area, an illuminance sensor that detects illuminance in the cleaning target area, and a vibration sensor that detects a vibration in the cleaning target area.

This configuration achieves similar effects as those described in the autonomous vacuum cleaner and the control device for an autonomous vacuum cleaner.

### INDUSTRIAL APPLICABILITY

The present invention is applicable to a control device for various autonomous vacuum cleaners such as those for home use and those for business use.

### REFERENCE MARKS IN THE DRAWINGS

1, 200: cleaning system
10: cleaner (autonomous vacuum cleaner)
20: body
20A: bottom surface
20B: suction port
20C: side part
21: panel cover
22: bumper
23: caster
30: drive unit
31: drive wheel
32: housing
40: cleaning unit (cleaning part)
41: main brush
42: side brush
43: brush shaft
44: bristle bundle
50: wastebasket
60: suction unit (cleaning part)
70: control unit (control device for autonomous vacuum cleaner)
71, 211: controller
72: storage unit
73: communication unit
81: obstacle detection sensor
82: distance measuring sensor
83: collision detection sensor
84: floor surface detection sensor
85: dust detection sensor
86: detector
90: power unit
91, 101: terminal
100: charger
110: display device
111: display unit
112, 212: communication unit
210: server

## Claims

1. A control device for an autonomous vacuum cleaner, the control device comprising a controller that controls an autonomous vacuum cleaner including a cleaning part collecting dust on a floor surface,
wherein the controller controls the autonomous vacuum cleaner based on information about a behavior of a human in a cleaning target area to be cleaned by the autonomous vacuum cleaner.

2. The control device according to claim 1, wherein the controller controls, based on the information about the behavior of the human, at least one of a time when the autonomous vacuum cleaner starts cleaning, a section to be cleaned in the cleaning target area, a cleaning period, and an operation of the cleaning part.

3. The control device according to claim 1, wherein the controller calculates a stay time of the human in the cleaning target area based on the information about the behavior of the human, and when the stay time exceeds a predetermined stay time, the controller causes the autonomous vacuum cleaner to start cleaning.

4. The control device according to claim 3, wherein the controller corrects the stay time based on at least one of a number of humans staying in the cleaning target area and an activity level of the human based on the information about the behavior of the human, and a stay time of a pet in the cleaning target area.

5. The control device according to claim 3, wherein when the stay time exceeds the predetermined stay time and the human is present in the cleaning target area, the controller postpones starting of cleaning by the autonomous vacuum cleaner.

6. The control device according to claim 3, wherein the controller sets the predetermined stay time based on an amount of dust collected.

7. The control device according to claim 1, further comprising a storage unit,
wherein
the storage unit stores a relationship between a stay position of the human in the cleaning target area and an amount of dust in the cleaning target area, and
the controller controls the autonomous vacuum cleaner based on the stay position and the amount of dust that are stored in the storage unit.

8. The control device according to claim 1, further comprising a storage unit,
the storage unit stores a distribution of an amount of dust in the cleaning target area, and
when the human is present in the cleaning target area, the controller sets a cleaning area to be cleaned by the autonomous vacuum cleaner, based on the distribution of the amount of dust stored in the storage unit or a stay position of the human in the cleaning target area.

9. The control device according to claim 1, further comprising a floor surface detection sensor,
wherein the controller controls the autonomous vacuum cleaner based on a state of a floor surface detected by the floor surface detection sensor.

10. The control device according to claim 1, further comprising a storage unit that stores the information about the behavior of the human,
wherein the controller controls the autonomous vacuum cleaner based on a behavior pattern of the human in the cleaning target area that is calculated based on the information about the behavior of the human stored in the storage unit.

11. An autonomous vacuum cleaner comprising:
the control device for the autonomous vacuum cleaner according to claim 1; and
a detector that detects the information about the behavior of the human,
wherein the detector includes at least one of a camera that captures an image of the cleaning target area, an infrared sensor that detects infrared light in the cleaning target area, an illuminance sensor that detects illuminance in the cleaning target area, and a vibration sensor that detects a vibration in the cleaning target area.

12. A cleaning system comprising:
an autonomous vacuum cleaner;
the control device for the autonomous vacuum cleaner according to claim 1; and
a detector that detects the information about the behavior of the human,
wherein the detector includes at least one of a camera that captures an image of the cleaning target area, an infrared sensor that detects infrared light in the cleaning target area, an illuminance sensor that detects illuminance in the cleaning target area, and a vibration sensor that detects a vibration in the cleaning target area.
